# EUROPÄISCHE PATENTSCHRIFT

(11) **EP 3 683 109 B1**
(45) Veröffentlichungstag und Bekanntmachung des Hinweises auf die Patenterteilung: **22.02.2023**
(21) Anmeldenummer: 20151664.8
(22) Anmeldetag: 14.01.2020
(51) Int. Cl.: B60T 7/20, B60T 11/10, B60T 13/26, B60T 13/68, B60T 15/18

(54) **VENTILANORDNUNG EINES HYDRAULISCH GEBREMSTEN ZUGFAHRZEUGS ZUR STEUERUNG DES BREMSDRUCKES EINES PNEUMATISCH GEBREMSTEN ANHÄNGERFAHRZEUGS**
VALVE ARRANGEMENT OF AN VEHICLE HYDRAULIC BRAKE SYSTEM FOR CONTROLLING A PNEUMATIC BRAKE SYSTEM OF A TRAILER
DISPOSITIF DE VALVES D'UN SYSTÈME DE FREINAGE HYDRAULIQUE D' UN VÉHICULE POUR COMMANDE UN SYSTÈME DE FREINAGE PNEUMATIQUE D'UNE REMORQUE

(30) Priorität: 15.01.2019 DE 102019100869
(43) Veröffentlichungstag der Anmeldung: 22.07.2020
(73) Patentinhaber: ZF CV Systems Europe BV, 1170 Brussels (BE)
(72) Erfinder: BRÜTT, Mirko, 30952 Ronnenberg (DE); HAVERKAMP, Michael, 30455 Hannover (DE); SPREMBERG, Jan, 30974 Wennigsen (DE); VOLKER, Lars, 30926 Seelze (DE)
(74) Vertreter: ZF Friedrichshafen AG

(56) Entgegenhaltungen:
- WO-A1-2016/128417
- WO-A1-2018/172340
- DE-A1-102017 005 979
- DE-U1-202018 001 859

## Beschreibung

Die Erfindung betrifft eine Ventilanordnung eines hydraulisch gebremsten Zugfahrzeugs zur Steuerung des Bremsdruckes eines pneumatisch gebremsten Anhängerfahrzeugs, die ein elektronisch gesteuertes Anhängersteuerventil mit einem Einlassventil, einem Auslassventil, einem pneumatisch ansteuerbaren Relaisventil, einem Abrissventil und einem Drucksensor zur Erfassung des eingesteuerten Bremssteuerdruckes sowie zudem ein hydraulisch gesteuertes Backupventil mit einem hydraulisch angesteuerten Relaisventil, einem Redundanzventil und einem Drucksensor zur Erfassung des hydraulischen Steuerdruckes aufweist, deren ausgangsseitige Bremssteuerleitungen über ein Wechselventil an den Kupplungskopf "Bremse" geführt sind.

Zugfahrzeuge mit elektronisch gesteuertem Anhängersteuerventil weisen aus Sicherheitsgründen üblicherweise auch einen redundanten Steuerzweig zur pneumatischen oder hydraulischen Steuerung des Bremssteuerdruckes für das Anhängerfahrzeug auf. Bei einem Ausfall der elektronischen Steuerung beziehungsweise eines elektronischen Bremswertsignals wird durch eine Umschaltung eines Redundanzventils in einem Relaisventil mittels eines an einer Bremsleitung des Zugfahrzeugs abgegriffenen pneumatischen oder hydraulischen Bremsdruckes ein Bremssteuerdruck für das Anhängerfahrzeug eingestellt und an den Kupplungskopf "Bremse" weitergeleitet. Hierdurch ist die Funktion der Betriebsbremsen des Anhängerfahrzeugs auch bei einem Ausfall der elektronischen Steuerung des Anhängersteuerventils gewährleistet.

In der DE 10 2017 005 979 A1 sind mehrere Ausführungen eines solchen Anhängersteuerventils eines pneumatisch gebremsten Zugfahrzeugs zur Steuerung des Bremsdruckes eines pneumatisch gebremsten Anhängerfahrzeugs beschrieben, bei denen der redundante Steuerzweig jeweils über ein als ein Magnetschaltventil ausgeführtes Redundanzventil aktiviert wird. Bei elektronischer Steuerung des Anhängersteuerventils, die im Normalbetrieb aktiviert ist, wird ein an dem Steuerdruckeingang eines pneumatisch angesteuerten Relaisventils anliegender Steuerdruck über die elektronische Ansteuerung von zwei Magnetventilen beziehungsweise Taktventilen eines an eine Vorratsdruckleitung angeschlossenen Einlassventils und eines an eine Entlüftungsleitung angeschlossenen Auslassventils eingestellt.

Bei einem Ausfall der elektronischen Steuerung beziehungsweise eines elektronischen Bremswertsignals wird der Steuerdruckeingang des Relaisventils durch die Umschaltung des Redundanzventils mit dem an einer Bremsleitung des Zugfahrzeugs abgegriffenen Bremsdruck beaufschlagt. Die Einsteuerung des an den Kupplungskopf "Bremse" weitergeleiteten Bremssteuerdruckes erfolgt jeweils über dasselbe pneumatisch angesteuerte Relaisventil und somit mit Ausnahme der Erzeugung beziehungsweise des Abgriffs des eingangsseitigen Steuerdruckes auf die gleiche Weise.

Dagegen sind aus der DE 10 2014 002 614 A1 mehrere Ausführungen einer Ventilanordnung eines hydraulisch gebremsten Zugfahrzeugs zur Steuerung des Bremsdruckes eines pneumatisch gebremsten Anhängerfahrzeugs bekannt, welche für die Einsteuerung des an den Kupplungskopf "Bremse" weitergeleiteten Bremssteuerdruckes jeweils ein elektronisch gesteuertes Anhängersteuerventil und ein hydraulisch gesteuertes Backupventil umfassen. Bei elektronischer Steuerung, die im Normalbetrieb aktiviert ist, wird innerhalb des Anhängersteuerventils ein an dem Steuerdruckeingang eines pneumatisch angesteuerten Relaisventils anliegender Steuerdruck über die elektronische Ansteuerung eines Einlassventils und eines Auslassventils eingestellt.

Bei einem Ausfall der elektronischen Steuerung beziehungsweise eines elektronischen Bremswertsignals wird das Einlassventil geschlossen sowie das Auslassventil geöffnet und damit das Anhängersteuerventil deaktiviert. Zugleich wird dabei ein in dem Backupventil angeordnetes Redundanzventil geöffnet und damit das Backupventil aktiviert. Hierdurch wird über ein in diesem angeordnetes hydraulisch angesteuertes Relaisventil, an dessen Steuerdruckeingang ein an einer hydraulischen Bremsleitung des Zugfahrzeugs abgegriffener Bremsdruck anliegt, ein alternativer Bremssteuerdruck für das Anhängerfahrzeug eingesteuert.

Die den von dem Anhängersteuerventil eingesteuerten Bremssteuerdruck und den von dem Backupventil eingesteuerten Bremssteuerdruck führenden Bremssteuerleitungen sind über ein Wechselventil an den Kupplungskopf "Bremse" geführt. Der von dem Anhängersteuerventil eingesteuerte Bremssteuerdruck kann mit einem pneumatischen Drucksensor erfasst werden, der innerhalb des Anhängersteuerventils angeordnet ist. In einer Ausführung der bekannten Ventilanordnung kann der als Steuerdruck wirksame hydraulische Bremsdruck mit einem hydraulischen Drucksensor erfasst werden, der innerhalb des Backupventils angeordnet ist. Durch einen Vergleich der sensorisch erfassten Druckwerte ist eine Funktionsdiagnose des Anhängersteuerventils und der Drucksensoren möglich.

Bislang sind das Anhängersteuerventil und das Backupventil als separate Bauteile mit eigenen Gehäusen ausgebildet, wodurch bei der Montage in dem jeweiligen Zugfahrzeug ein hoher Montageaufwand und aufgrund vieler Rohrverschraubungen das Risiko von Montagefehlern besteht. Auch kann der eingesteuerte Bremssteuerdruck mit der bisherigen Anordnung des pneumatischen Drucksensors nur im Normalbetrieb der Ventilanordnung, also nur bei elektronischer Steuerung des Anhängersteuerventils, überwacht werden. Da das Redundanzventil ausgangsseitig des hydraulisch angesteuerten Relaisventils in der Bremssteuerleitung angeordnet ist, kann das im Normalbetrieb der Ventilanordnung zwischen dem Relaisventil und dem Redundanzventil eingeschlossene Luftvolumen bei der Betätigung des Bremspedals zu Druckschwingungen in der betreffenden hydraulischen Bremsleitung führen, die am Bremspedal als Vibration spürbar sind.

Die WO2018172340A1 offenbart ein elektropneumatisches Anhängersteuermodul für ein elektronisch steuerbares pneumatisches Bremssystem für einen Fahrzeugzug mit einem Zugwagen und einem Anhängerwagen, mit: einer elektronischen Steuereinheit, einem pneumatischen Vorratseingang, der mit einem Druckluftvorrat verbindbar ist, einer Anhängersteuer-Ventileinheit mit einem oder mehreren elektropneumatischen Ventilen,einem Anhängerbremsdruckanschluss, und einem Anhängerversorgungsdruckanschluss. Das Anhängersteuermodul zeichnet sich dadurch aus, dass die elektronische Steuereinheit einen Parkbremssignal-Eingang zum Aufnehmen eines elektronischen Bremsrepräsentationssignals , das die Betätigung einer Feststellbremse des Zugwagens repräsentiert, aufweist, wobei die elektronische Steuereinheit dazu eingerichtet ist, basierend auf dem Bremsrepräsentationssignal wenigstens ein Ventil des einen oder der mehreren elektropneumatischen Ventile der Anhängersteuer-Ventileinheit zu schalten, um einen Bremsdruck an dem Anhängerbremsdruckanschluss auszusteuern.

Die DE202018001859U1 beschreibt ein Bremssystem eines Zugfahrzeugs, mit einer hydraulischen Bremsanlage zur Betätigung der Radbremsen des Zugfahrzeugs und mit einer pneumatischen Bremsanlage zur Betätigung der Radbremsen eines ankoppelbaren Anhängerfahrzeugs, wobei die pneumatische Bremsanlage ein Anhängersteuerventil mit mindestens einem hydraulischen Steuereingang, einem pneumatischen Vorsteuereingang, einem Vorratsdruckeingang, einem Bremsdruckausgang sowie ein diesem Bremsdruckausgang bezüglich einer eingangsseitigen Vorratsdruckleitung vorgeschaltetes Abrissventil mit mindestens einem pneumatischen Vorsteuereingang, einem Vorratsdruckeingang und einem Vorratsdruckausgang aufweist, wobei eine an den Vorsteuereingang des Abrissventils angeschlossene Vorsteuerleitung über ein Vorsteuerventil wechselweise mit einem Entlüftungsausgang oder mit einer einen Vorratsdruck führenden Vorratsdruckleitung verbindbar ist, dass das Vorsteuerventil als ein 3/2-Wege-Magnetschaltventil ausgebildet ist, und dass das Vorsteuerventil mittels eines mit einem Bremspedal in Stellverbindung befindlichen Bremslichtschalter umschaltbar ist.

Der Erfindung lag die Aufgabe zugrunde, die bekannte Ventilanordnung eines hydraulisch gebremsten Zugfahrzeugs zur Steuerung des Bremsdruckes eines pneumatisch gebremsten Anhängerfahrzeugs derart weiterzubilden, dass die gerade genannten Nachteile beseitigt sind.

Ein erster Aspekt der gestellten Aufgabe ist in Verbindung mit den eingangs genannten Merkmalen des Oberbegriffs des Anspruchs 1 dadurch gelöst, dass die Ventile sowie die Drucksensoren des Anhängersteuerventils, die Ventile des Backupventils und das Wechselventil in einem Anhängersteuermodul mit einem einzigen Gehäuse baulich zusammengefasst sind.

Die Erfindung geht demnach aus von einer Ventilanordnung eines hydraulisch gebremsten Zugfahrzeugs zur Steuerung des Bremsdruckes eines pneumatisch gebremsten Anhängerfahrzeugs, welche ein elektronisch gesteuertes Anhängersteuerventil und ein hydraulisch gesteuertes Backupventil aufweist. Das Anhängersteuerventil weist ein pneumatisch angesteuertes Relaisventil, ein Abrissventil und einen Drucksensor zur Erfassung des eingesteuerten Bremssteuerdruckes auf. Das Backupventil weist ein hydraulisch angesteuertes Relaisventil, ein Redundanzventil und einen Drucksensor zur Erfassung des hydraulischen Steuerdruckes auf. Die ausgangsseitigen Bremssteuerleitungen des Anhängersteuerventils und des Backupventils sind über ein Wechselventil an den Kupplungskopf "Bremse" geführt.

Durch die Zusammenfassung der Ventile sowie der Drucksensoren des Anhängersteuerventils, des Backupventils und des Wechselventils in einem Anhängersteuermodul mit einem einzigen Gehäuse entfallen bei der Montage an dem jeweiligen Zugfahrzeug viele Befestigungs- und Rohrverschraubungen. Dadurch ist der Montageaufwand gegenüber der bisherigen Ausführung der Ventilanordnung deutlich reduziert, und Montagefehler beim Anschließen der Rohrleitungen sind weitgehend ausgeschlossen. Ebenso können die elektrischen Steuer- und Sensorleitungen der Magnetventile sowie der Drucksensoren an eine einzige Steckerbuchse des Anhängersteuermoduls geführt und von dort über ein einziges Kabel mit dem Steuergerät verbunden werden.

In einem weiteren Integrationsschritt kann auch ein zugeordnetes elektronisches Steuergerät, das über elektrische Steuer- und Sensorleitungen mit Magnetventilen und den Drucksensoren des Anhängersteuermoduls verbunden ist, und/oder ein Feststellbremsventil, welches über eine Steuerdruckleitung an einen invertierten Steuerdruckeingang des Anhängersteuermoduls angeschlossen ist, unmittelbar an dem Gehäuse des Anhängersteuermoduls angeordnet, beispielsweise über eine Schraub- oder Clipverbindung an dem Gehäuse des Anhängersteuermoduls befestigt sein.

Hierdurch sind das Steuergerät und das Feststellbremsventil einerseits der Baugruppe des Anhängersteuermoduls zugeordnet und können zusammen mit diesem an dem betreffenden Zugfahrzeug befestigt werden. Andererseits ist dadurch im Fall einer Störung die Demontage und Überprüfung oder der Ersatz dieser Bauteile auf einfache Weise möglich.

Zur leichten Demontage ist es auch vorteilhaft, wenn der hydraulische Drucksensor und/oder der pneumatische Drucksensor, die relativ störungsanfällig sein können, außen an dem Gehäuse des Anhängersteuermoduls angeordnet sind.

Zur Verbesserung der Funktionsdiagnose und der Redundanz der Drucksensoren kann optional ein zweiter hydraulischer und/oder ein zweiter pneumatischer Drucksensor vorgesehen sein, der parallel zu dem ersten hydraulischen Drucksensor und/oder pneumatischen Drucksensor an die zugeordnete Sensorleitung angeschlossen und ebenfalls außen an dem Gehäuse des Anhängersteuermoduls angeordnet ist.

Ein zweiter Aspekt der gestellten Aufgabe ist in Verbindung mit den eingangs genannten

Merkmalen des Oberbegriffs des Anspruchs 5 im Zusammenhang mit Anspruch 1 dadurch gelöst, dass der pneumatische

Drucksensor an einen ventilseitigen Leitungsabschnitt der Bremssteuerleitung angeschlossen ist, welcher zwischen dem Wechselventil und dem Bremssteuerausgang des Anhängersteuermoduls angeordnet ist.

Durch den Anschluss des pneumatischen Drucksensors stromab hinter dem Wechselventil kann der eingesteuerte Bremssteuerdruck, welcher über den ventilseitigen Abschnitt und einen externen Abschnitt der Bremssteuerleitung an den Kupplungskopf "Bremse" geführt ist, nun auch im Redundanzbetrieb des Anhängersteuermoduls gemessen werden. Durch einen Vergleich mit dem mittels des hydraulischen Drucksensors erfassten hydraulischen Bremsdruck, der im Redundanzbetrieb als Steuerdruck des hydraulisch angesteuerten Relaisventils genutzt wird, kann nun auch eine mögliche Fehlfunktion des redundanten Steuerpfades schnell und sicher erkannt werden.

Ein dritter Aspekt der gestellten Aufgabe ist in Verbindung mit den eingangs genannten

Merkmalen des Oberbegriffs des Anspruchs 6 im Zusammenhang mit Anspruch 1 dadurch gelöst, dass das Redundanzventil in einer eingangsseitigen Vorratsdruckleitung des hydraulisch angesteuerten Relaisventils zwischen einer ausgangsseitigen Vorratsdruckleitung des Abrissventils und einem Vorratsdruckeingang des Relaisventils angeordnet sowie derart ausgebildet ist, dass der relaisventilseitige Abschnitt der Vorratsdruckleitung im Normalbetrieb des Anhängersteuermoduls entlüftet ist.

Dadurch, dass der relaisventilseitige Abschnitt der Vorratsdruckleitung im Normalbetrieb des Anhängersteuermoduls nun entlüftet ist, wird der Steuerkolben des hydraulisch angesteuerten Relaisventils bei einer Betätigung des Bremspedals gegen einen Anschlag gedrückt, so dass Druckschwingungen in der betreffenden hydraulischen Bremsleitung, die am Bremspedal als Vibration spürbar wären, nicht mehr auftreten können.

Zur Erzielung einer hohen Schaltdynamik kann das Redundanzventil als ein pneumatisch angesteuertes 3/2-Wegeventil ausgebildet sein, durch welches der relaisventilseitige Abschnitt der Vorratsdruckleitung bei drucklosem Steuerdruckeingang belüftet und bei druckführendem Steuerdruckeingang entlüftet wird. Das dem Redundanzventil zugeordnete Vorsteuerventil ist in diesem Fall als ein 3/2-Wege-Magnetschaltventil ausgebildet, durch welches der Steuerdruckeingang des Redundanzventils im unbestromten Zustand des Vorsteuerventils entlüftet und im bestromten Zustand des Vorsteuerventils belüftet wird. Im Normalbetrieb des Anhängersteuermoduls wird das Vorsteuerventil von dem elektronischen Steuergerät aus bestromt und damit der Steuerdruckeingang des Redundanzventils belüftet, wodurch der relaisventilseitige Abschnitt der Vorratsdruckleitung entlüftet und damit der Vorratsdruckeingang des Relaisventils drucklos geschaltet wird.

Alternativ zu der gerade genannten Ausführung kann das Redundanzventil auch als ein pneumatisch angesteuertes 3/2-Wegeventil ausgebildet sein, durch welches der relaisventilseitige Abschnitt der Vorratsdruckleitung bei drucklosem Steuerdruckeingang entlüftet und bei druckführendem Steuerdruckeingang belüftet wird. Das diesem Redundanzventil zugeordnete Vorsteuerventil ist als ein 3/2-Wege-Magnetschaltventil ausgebildet, durch welches der Steuerdruckeingang des Redundanzventils im unbestromten Zustand des Vorsteuerventils belüftet und im bestromten Zustand des Vorsteuerventils entlüftet wird. Im Normalbetrieb des Anhängersteuermoduls wird das Vorsteuerventil von dem elektronischen Steuergerät aus bestromt und damit der Steuerdruckeingang des Redundanzventils entlüftet, wodurch der relaisventilseitige Abschnitt der Vorratsdruckleitung entlüftet und damit der Vorratsdruckeingang des Relaisventils drucklos geschaltet wird.

Ein vierter Aspekt der gestellten Aufgabe ist in Verbindung mit den oben genannten Merkmalen des Oberbegriffs der Ansprüche 9 beziehungsweise 10 jeweils im Zusammenhang mit Anspruch 1 dadurch gelöst, dass das hydraulisch angesteuerte Relaisventil justierbar ausgebildet oder mit einem leicht austauschbaren Ventilsteuersatz versehen ist, der mindestens einen Ventilkolben, einen Ventilsitz und eine Ventilfeder aufweist.

Durch die Justierbarkeit des hydraulisch angesteuerten Relaisventils oder den Austausch des Ventilsteuersatzes des Relaisventils kann der redundante Steuerpfad des Anhängersteuermoduls auf relativ einfache Weise an das Bremsverhalten des jeweiligen Fahrzeuggespanns angepasst werden. Im elektropneumatischen Steuerpfad des Anhängersteuermoduls erfolgt eine derartige Anpassung dagegen durch eine Änderung von Steuerungsparametern innerhalb des Steuerprogramms des elektronischen Steuergerätes.

Die erfindungsgemäßen Gestaltungsmerkmale können separat oder in beliebiger Kombination in einer Ventilanordnung eines hydraulisch gebremsten Zugfahrzeugs zur Steuerung des Bremsdruckes eines pneumatisch gebremsten Anhängerfahrzeugs zur Anwendung gebracht werden.

Zur weiteren Verdeutlichung der Erfindung ist der Beschreibung eine Zeichnung mit mehreren Ausführungsbeispielen beigefügt. In dieser zeigt
Fig. 1 eine erste konkrete Ausführungsform eines erfindungsgemäßen Anhängersteuermoduls in einer schematischen Darstellung,
Fig. 2 eine zweite konkrete Ausführung eines erfindungsgemäßen Anhängersteuermoduls in einer schematischen Darstellung,
Fig. 3 eine bekannte Ventilanordnung eines hydraulisch gebremsten Zugfahrzeugs zur Steuerung des Bremsdruckes eines pneumatisch gebremsten Anhängerfahrzeugs in einer schematischen Darstellung,
Fig. 4 eine erste allgemeine Ausführung eines erfindungsgemäßen Anhängersteuermoduls in einer vereinfachten schematischen Darstellung, und
Fig. 5 eine zweite allgemeine Ausführung eines erfindungsgemäßen Anhängersteuermoduls in einer vereinfachten schematischen Darstellung.

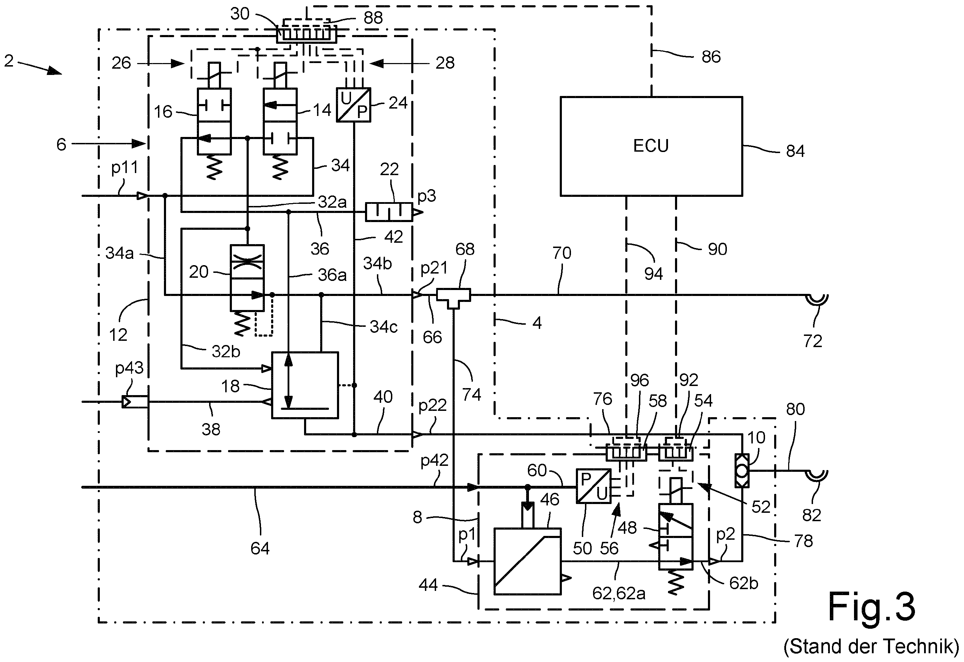

In der schematischen Darstellung der Fig. 3 ist eine bekannte Ventilanordnung 2 eines hydraulisch gebremsten Zugfahrzeugs zur Steuerung des Bremsdruckes eines pneumatisch gebremsten Anhängerfahrzeugs abgebildet, die weitgehend den in der DE 10 2014 002 614 A1 beschriebenen Ausführungsformen einer derartigen Ventilanordnung entspricht. Die in Fig. 3 zur Verdeutlichung von einer Systemgrenze 4 eingegrenzte Ventilanordnung 2 umfasst ein elektropneumatisch gesteuertes Anhängersteuerventil 6, ein hydraulisch gesteuertes Backupventil 8 und ein Wechselventil 10.

Das Anhängersteuerventil 6 weist ein pneumatisch steuerbares Relaisventil 18, ein pneumatisch steuerbares Abrissventil 20, ein Einlassventil 14, ein Auslassventil 16, einen Schalldämpfer 22 und einen pneumatischen Drucksensor 24 auf, die innerhalb eines Gehäuses 12 angeordnet sind. Das Einlassventil 14 und das Auslassventil 16 sind jeweils als ein 2/2-Wege-Magnetventil, insbesondere als Taktventile ausgebildet und dienen zu Ansteuerung des Relaisventils 18. Die Schaltmagnete des Einlassventils 14 und des Auslassventils 16 sind über elektrische Steuerleitungen 26 und der Drucksensor 24 über elektrische Sensorleitungen 28 sowie eine in der Außenwand des Gehäuses 12 angeordnete Steckerbuchse 30 und ein mit einem Stecker 88 versehenes Kabel 86 mit einem elektronischen Steuergerät (ECU) 84 verbunden.

Das Einlassventil 14 ist im unbestromten Zustand geschlossen und im bestromten Zustand geöffnet. Das Auslassventil 16 ist im unbestromten Zustand geöffnet und im bestromten Zustand geschlossen. Zweige einer an das Einlassventil 14 und das Auslassventil 16 angeschlossenen Steuerdruckleitung 32a, 32b, die zu einem ersten Steuerdruckeingang des Relaisventils 18 und zu einem Steuerdruckeingang des Abrissventils 20 führen, sind über das Einlassventil 14 mit einer internen Vorratsdruckleitung 34a und über das Auslassventil 16 mit einer Entlüftungsleitung 36, 36a verbindbar. Die Vorratsdruckleitung 34a ist an einen Vorratsdruckeingang p11 des Anhängersteuerventils 6 angeschlossen.

Im eingebauten Zustand der Ventilanordnung 2 ist der Vorratsdruckeingang p11 an eine Vorratsdruckleitung 34 einer Druckversorgungsanlage des Zugfahrzeugs angeschlossen und führt bei laufendem Antriebsmotor des Zugfahrzeugs einen Vorratsdruck in Höhe von etwa 8,5 bar. Die Entlüftungsleitung 36 ist über den Schalldämpfer 22 an einen Entlüftungsausgang p3 des Anhängersteuerventils 6 geführt. Die von der Vorratsdruckleitung 34 abzweigende weitere Vorratsdruckleitung 34a ist über das Abrissventil 20 und einen ausgangsseitigen Abschnitt 34b der weiteren Vorratsdruckleitung 34a an einen Vorratsdruckausgang p21 des Anhängersteuerventils 6 geführt. Von dem Vorratsdruckdruckausgang p21 ist eine externe Vorratsdruckleitung 66, 70 über einen als T-Stück ausgebildeten Rohrverbinder 68 an einen Kupplungskopf "Vorrat" (rot) 72 geführt.

Eine weitere Steuerdruckleitung 38 ist zwischen einem invertierten Steuerdruckeingang p43 des Anhängersteuerventils 6 und einem zweiten Steuerdruckeingang des Relaisventils 18 angeordnet. Im eingebauten Zustand der Ventilanordnung 2 ist der invertierte Steuerdruckeingang p43 an eine Steuerdruckleitung eines Feststellbremsventils angeschlossen, in welcher der Steuerdruck im unbetätigten Zustand des Feststellbremsventils hoch und bei Betätigung des Feststellbremsventils abgesenkt wird.

Ein Vorratsdruckeingang des Relaisventils 18 ist über eine Vorratsdruckleitung 34c an den ausgangsseitigen Abschnitt 34b der Vorratsdruckleitung 34a angeschlossen. Ein Entlüftungsausgang des Relaisventils 18 ist über eine Entlüftungsleitung 36a an die Entlüftungsleitung 36 angeschlossen.

Ein Bremssteuerausgang des Relaisventils 18 ist über eine interne Bremssteuerleitung 40 an einen Bremssteuerdruckausgang p22 des Anhängersteuerventils 6 geführt. Von dem Bremssteuerdruckausgang p22 ist eine externe Bremssteuerleitung 76 über das Wechselventil 10 und eine ausgangsseitige Bremssteuerleitung 80 an einen Kupplungskopf "Bremse" (gelb) 82 geführt. Der Drucksensor 24 ist über eine druckführende Sensorleitung 42 an die interne Bremssteuerleitung 40 angeschlossen.

Das Backupventil 8 weist ein hydraulisch angesteuertes Relaisventil 46, ein als ein 3/2-Wege-Magnetschaltventil ausgebildetes Redundanzventil 48 und einen hydraulischen Drucksensor 50 auf, die innerhalb eines Gehäuses 44 angeordnet sind. Das Redundanzventil 48 ist über elektrische Steuerleitungen 52 sowie eine in der Außenwand des Gehäuses 44 angeordnete erste Steckerbuchse 54 und ein mit einem Stecker 92 versehenes Kabel 90 mit dem elektronischen Steuergerät 84 verbunden. Ebenso ist der Drucksensor 50 über elektrische Sensorleitungen 56 sowie eine in der Außenwand des Gehäuses 44 angeordnete zweite Steckerbuchse 58 und ein mit einem Stecker 96 versehenes Kabel 94 mit dem elektronischen Steuergerät 84 verbunden.

Von einem hydraulischen Steuerdruckeingang p42 des Backupventils 8, an den eine von einer hydraulischen Bremsleitung des Zugfahrzeugs abzweigende Steuerdruckleitung 64 führt, ist eine interne hydraulische Steuerdruckleitung 60 an einen Steuerdruckeingang des Relaisventils 46 geführt. An diese Steuerdruckleitung 60 ist auch der hydraulische Drucksensor 50 angeschlossen. Von dem erwähnten Rohrverbinder 68 ist eine Vorratsdruckleitung 74 an einen Vorratsdruckeingang p1 des Backupventils 8 geführt, der mit einem Vorratsdruckeingang des Relaisventils 46 verbunden ist.

In einer internen Bremssteuerleitung 62, die zwischen einem Bremssteuerdruckausgang des Relaisventils 46 und einem Bremssteuerdruckausgang p2 des Backupventils 8 verläuft, ist das Redundanzventil 48 angeordnet. Im unbestromten Zustand des Redundanzventils 48 sind der innere Abschnitt 62a und der äußere Abschnitt 62b der Bremssteuerleitung 62 miteinander verbunden. Im bestromten Zustand des Redundanzventils 48 ist der innere Abschnitt 62a der Bremssteuerleitung 62 gegenüber dem äußeren Abschnitt 62b abgesperrt, und der äußere Abschnitt 62b der Bremssteuerleitung 62 entlüftet. Von dem Bremssteuerdruckausgang p2 des Backupventils 8 ist eine externe Bremssteuerleitung 78 über das Wechselventil 10 und die ausgangsseitige Bremssteuerleitung 80 an den Kupplungskopf "Bremse" (gelb) 82 geführt.

Im Normalbetrieb der Ventilanordnung 2 ist das Anhängersteuerventil 6 aktiviert, welches dazu von dem elektronischen Steuergerät 84 angesteuert wird. Hierzu wird von einem in dem Fußbremsventil des Zugfahrzeugs angeordneten Bremssensor ein Bremswertsignal ermittelt und an das Steuergerät 84 übertragen. Bei einer Betätigung des Fußbremsventils wird durch eine entsprechende Ansteuerung des Einlassventils 14 und des Auslassventils 16 des Anhängersteuerventils 6 in die Steuerdruckleitungen 32a, 32b ein Steuerdruck eingestellt, der in dem Relaisventil 18 die Einsteuerung eines entsprechenden Bremssteuerdruckes in der internen Bremssteuerleitung 40 bewirkt. Der eingestellte Bremssteuerdruck wird über den Bremssteuerausgang p22, die externe Bremssteuerleitung 76, das Wechselventil 10 und die ausgangsseitige Bremssteuerleitung 80 an den Kupplungskopf "Bremse" (gelb) 82 geführt.

Da das Redundanzventil 48 im Normalbetrieb der Ventilanordnung 2 bestromt und somit der eingangsseitige Abschnitt 62a der internen Bremssteuerleitung 62 des Backupventils 8 abgesperrt ist, ist das Backupventil 8 dann deaktiviert. Durch die Einsteuerung eines Steuerdruckes in die Steuerdruckleitung 32a des Anhängersteuerventils 6 wird das Abrissventil 20 in eine Bereitschaftsstellung geschaltet. Bei größerer Durchflussmenge, die sich erst bei einer Leckage zum Beispiel in der anhängerseitigen Bremssteuerleitung einstellt, wird das Abrissventil 20 durch den Venturieeffekt einer Spaltströmung in seine Drosselstellung geschaltet, in der die Zufuhr von Druckluft von dem Vorratsdruckanschluss p11 aus stark gedrosselt wird. Die Entlüftung der anhängerseitigen Vorratsdruckleitung, durch die in dem Anhängerbremsventil des Anhängerfahrzeugs eine Notbremsung ausgelöst wird, erfolgt dann über die externen beiden Vorratsdruckleitungen 66, 70, die internen Vorratsdruckleitungen 34b, 34c, das Relaisventil 18, die interne Bremssteuerleitung 40, die externen Bremssteuerleitungen 76, 80 und die anhängerseitige Bremssteuerleitung bis zur Leckagestelle.

Bei einem Ausfall des elektronischen Steuergerätes 84 beziehungsweise eines elektronischen Bremswertsignals wird die Bestromung des Einlassventils 14 und des Auslassventils 16 des Anhängersteuerventils 6 abgeschaltet, wodurch das Einlassventil 14 dauerhaft geschlossen sowie das Auslassventil 16 dauerhaft geöffnet und damit das Anhängersteuerventil 6 deaktiviert wird. Zugleich wird dabei das Redundanzventil 48 des Backupventils 8 durch seine Bestromung geöffnet und damit das Backupventil 8 aktiviert. Hierdurch wird nun in dem hydraulisch angesteuerten Relaisventil 46 in Abhängigkeit des in der hydraulischen Steuerdruckleitung 64 wirksamen Bremsdruckes ein entsprechender Bremssteuerdruck eingestellt, der über die internen Bremssteuerleitung 62, 62a, 62b, den Bremssteuerausgang p2, die externe Bremssteuerleitung 78, das Wechselventil 10 und die ausgangsseitige Bremssteuerleitung 80 an den Kupplungskopf "Bremse" (gelb) 82 geführt wird.

Nachteilig ist an der bekannten Ventilanordnung 2, dass das Anhängersteuerventil 6 und das Backupventil 8 als separate Bauteile mit eigenen Gehäusen 12, 44 ausgebildet sind, wodurch bei der Montage in dem jeweiligen Zugfahrzeug ein hoher Montageaufwand und aufgrund vieler Rohrverschraubungen das Risiko von Montagefehlern besteht. Auch kann der eingesteuerte Bremssteuerdruck bei der bisherigen Anordnung des pneumatischen Drucksensors 24 nur im Normalbetrieb der Ventilanordnung 2, also bei elektronischer Steuerung des Anhängersteuerventils 6 überwacht werden. Da das Redundanzventil 48 ausgangsseitig des hydraulisch angesteuerten Relaisventils 46 in der Bremssteuerleitung 62 angeordnet ist, kann das im Normalbetrieb der Ventilanordnung 2 zwischen dem Relaisventil 46 und dem Redundanzventil 48 eingeschlossene Luftvolumen bei der Betätigung des Bremspedals zu Druckschwingungen in der betreffenden hydraulischen Bremsleitung führen, die am Bremspedal als Vibration spürbar sind.

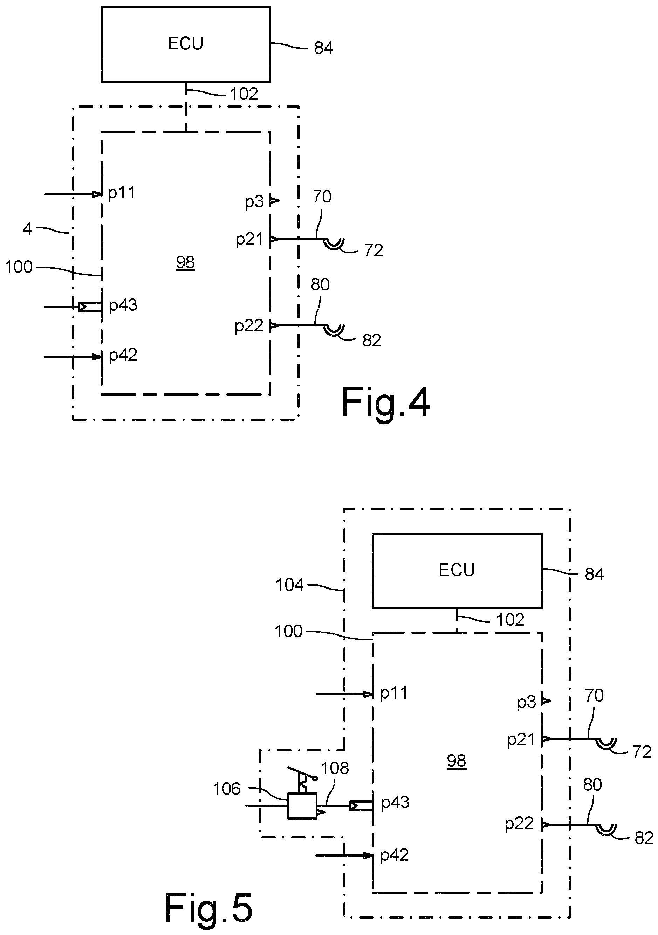

Der Nachteil der vielen separaten Bauteile der Ventilanordnung 2 gemäß Fig. 3 ist in der erfindungsgemäßen Ausführung gemäß Fig. 4 dadurch behoben, dass die erwähnten Ventile 14, 16, 18, 20, 46, 48 und die genannten Drucksensoren 24, 50 des Anhängersteuerventils 6 sowie des Backupventils 8 und das Wechselventil 10 in einem gemeinsamen Anhängersteuermodul 98 mit einem einzigen Gehäuse 100 zusammengefasst sind. Das Anhängersteuermodul 98 ist mit geringem Montageaufwand in dem betreffenden Zugfahrzeug installierbar, und Montagefehler beim Anschließen der Rohrleitungen sind weitgehend ausgeschlossen. Zudem können die elektrischen Steuerleitungen 26, 52 der drei Magnetventile 14, 16, 48 und die elektrischen Sensorleitungen 28, 56 der beiden Drucksensoren 24, 50 nun vorteilhaft in einem einzigen Kabel 102 zusammengefasst werden, über das sie mit dem elektronischen Steuergerät 84 verbunden sind (siehe Fig. 4).

In einem weiteren Integrationsschritt gemäß Fig. 5 sind auch das elektronische Steuergerät 84 und das über eine Steuerdruckleitung 108 an den invertierten Steuerdruckeingang p43 des Anhängersteuermoduls 98 angeschlossene Feststellbremsventil 106 der durch die Systemgrenze 104 eingeschlossenen Baugruppe des Anhängersteuermoduls 98 zugeordnet. Hierzu sind das Steuergerät 84 und das Feststellbremsventil 106 über eine Schraub- oder Clipverbindung an dem Gehäuse 100 des Anhängersteuermoduls 98 befestigt, wodurch diese Bauteile im Fall einer Störung leicht demontiert, überprüft oder ersetzt werden können.

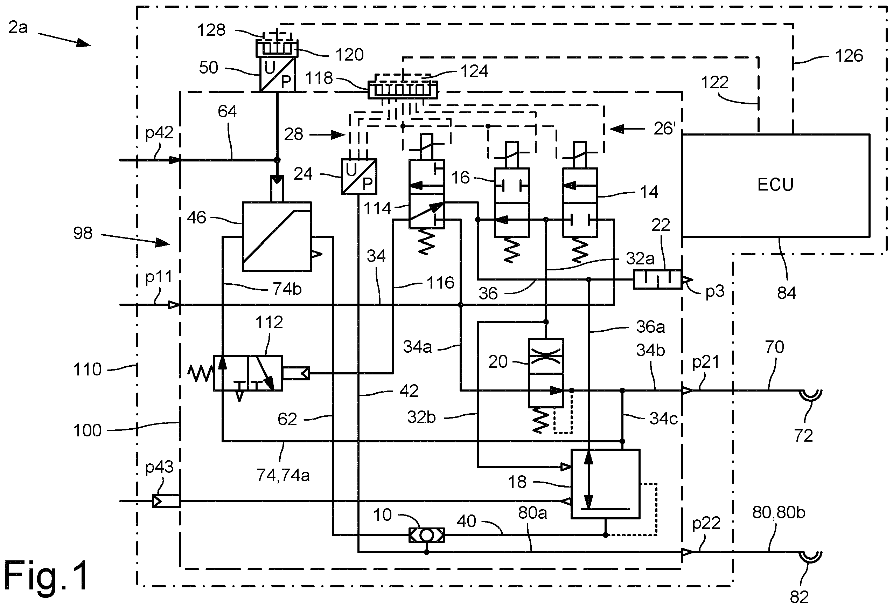

Ein konkretes Ausführungsbeispiel einer Ventilanordnung 2a mit einem erfindungsgemäßen Anhängersteuermodul 98 ist in Fig. 1 abgebildet. Die durch eine Systemgrenze 110 umschlossene Baugruppe des Anhängersteuermoduls 98 umfasst hier auch das elektronische Steuergerät 84, welches außen an dem Gehäuse 100 des Anhängersteuermoduls 98 befestigt ist. Da der Aufbau und die Wirkungsweise des Anhängersteuermoduls 98 weitgehend denen der Ventilanordnung 2 gemäß Fig. 3 entspricht, ist die nachfolgende Beschreibung auf die Unterschiede hierzu beschränkt.

Das Redundanzventil 112 ist nun in der eingangsseitigen Vorratsdruckleitung 74 des hydraulisch angesteuerten Relaisventils 46 angeordnet und als ein druckgesteuertes 3/2-Wegeventil ausgebildet. Das dem Redundanzventil 112 zugeordnete Vorsteuerventil 114 ist als ein 3/2-Wege-Magnetventil ausgebildet. Im unbestromten Zustand des Vorsteuerventils 114 ist eine zu dem Steuereingang des Redundanzventils 112 führende Steuerdruckleitung 116 mit der zum Schalldämpfer 22 führenden Entlüftungsleitung 36 verbunden. Der Steuereingang des Redundanzventils 112 ist dann drucklos, und die beiden durch das Redundanzventil 112 getrennten Leitungsabschnitte 74a, 74b der Vorratsdruckleitung 74 sind hierbei miteinander verbunden. Im bestromten Zustand des Vorsteuerventils 114 ist die Steuerdruckleitung 116 des Redundanzventils 112 mit der Vorratsdruckleitung 34 verbunden, und der Steuereingang des Redundanzventils 112 ist somit druckführend. Dann ist der eingangsseitige Leitungsabschnitt 74a der Vorratsdruckleitung 74 gegenüber dem relaisventilseitgen Leitungsabschnitt 74b abgesperrt sowie der relaisventilseitige Leitungsabschnitt 74b entlüftet.

Da das Vorsteuerventil 114 im Normalbetrieb des Anhängersteuermoduls 98 bestromt wird, ist der relaisventilseitige Leitungsabschnitt 74b der Vorratsdruckleitung 74 dann entlüftet. Hierdurch wird der Steuerkolben des hydraulisch angesteuerten Relaisventils 46 bei einer Betätigung des Bremspedals gegen einen Anschlag gedrückt, sodass Druckschwingungen in der mit dem hydraulischen Steuerdruckeingang p42 in Verbindung stehenden hydraulischen Bremsleitung, die am Bremspedal als Vibration spürbar wären, nicht mehr auftreten können. Durch die druckgesteuerte Ausführung des Redundanzventils 112 wird gegenüber einer Ausbildung als Magnetventil zudem eine höhere Schaltdynamik erzielt.

Der pneumatische Drucksensor 24 ist über die pneumatische Sensorleitung 42 nun stromabwärts des Wechselventils 10 an den ventilseitigen Leitungsabschnitt 80a der Bremssteuerleitung 80 angeschlossen, sodass der eingesteuerte Bremssteuerdruck nun auch im Redundanzbetrieb des Anhängersteuermoduls 98 sensorisch erfasst werden kann. Der hydraulische Drucksensor 50 ist dagegen nun außen an dem Gehäuse 100 des Anhängersteuermoduls 98 angeordnet, mit einer eigenen Steckerbuchse 120 versehen und über ein mit einem entsprechenden Stecker 128 versehenes Kabel 126 mit dem elektronischen Steuergerät 84 verbunden. Der hydraulische Drucksensor 50 ist bei Bedarf nun leicht austauschbar. Dagegen sind die elektrischen Steuerleitungen 26' der drei Magnetventile 14, 16, 114 und die elektrischen Sensorleitungen 28 des pneumatischen Drucksensors 24 in eine in der Außenwand des Gehäuses 100 angeordnete Steckerbuchse 118 geführt und über ein mit einem Stecker 124 versehenes Kabel 122 mit dem elektronischen Steuergerät 84 verbunden.

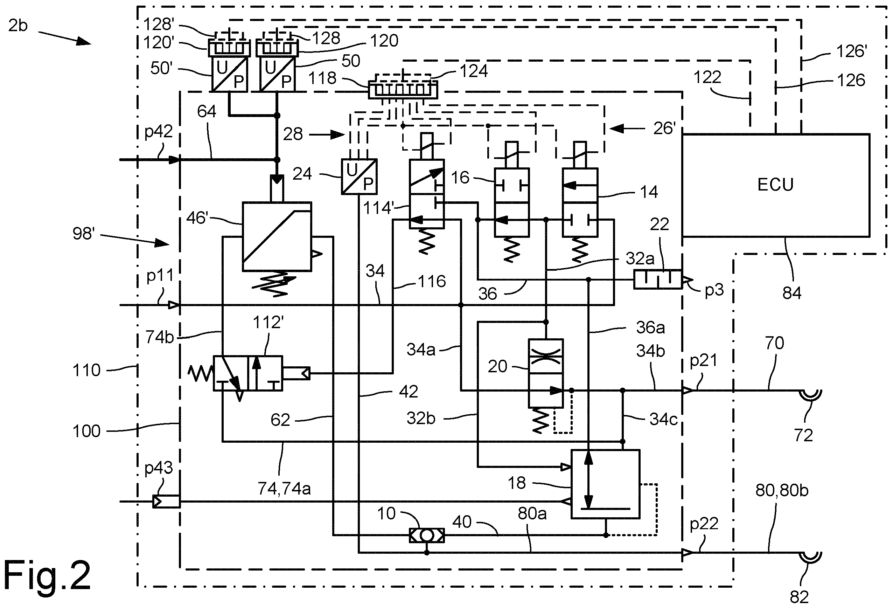

Ein in Fig. 2 abgebildetes zweite konkretes Ausführungsbeispiel einer Ventilanordnung 2b mit einem erfindungsgemäßen Anhängersteuermodul 98' unterscheidet sich in einigen Details von dem in Fig. 1 dargestellten ersten Ausführungsbeispiel. Das als druckgesteuertes 3/2-Wegeventil ausgebildete Redundanzventil 112' und das zugeordnete, als ein 3/2-Wege-Magnetventil ausgebildete Vorsteuerventil 114' weisen bei gleicher Funktionsweise nun jeweils eine umgekehrte Steuerlogik auf. Im unbestromten Zustand des Vorsteuerventils 114' ist die zu dem Steuereingang des Redundanzventils 112' führende Steuerdruckleitung 116 mit der Vorratsdruckleitung 34 verbunden. Der Steuereingang des Redundanzventils 112' ist dann druckführend, und die beiden durch das Redundanzventil 112' getrennten Leitungsabschnitte 74a, 74b der Vorratsdruckleitung 74 sind dabei miteinander verbunden. Im bestromten Zustand des Vorsteuerventils 114' ist die Steuerdruckleitung 116 des Redundanzventils 112' mit der Entlüftungsleitung 36 verbunden, und der Steuereingang des Redundanzventils 112' ist somit drucklos. Dann ist der eingangsseitige Leitungsabschnitt 74a der Vorratsdruckleitung 74 gegenüber dem relaisventilseitigen Leitungsabschnitt 74b abgesperrt und der relaisventilseitige Leitungsabschnitt 74b entlüftet. Da das Vorsteuerventil 114' im Normalbetrieb des Anhängersteuermoduls 98' bestromt wird, ist der relaisventilseitige Leitungsabschnitt 74b der Vorratsdruckleitung 74 dann entlüftet.

Das hydraulisch angesteuerte Relaisventil 46' ist nun justierbar ausgebildet oder mit einem leicht austauschbaren Ventilsteuersatz versehen, der mindestens einen Ventilkolben, einen Ventilsitz und eine Ventilfeder umfasst. Hierdurch kann der redundante Steuerpfad des Anhängersteuermoduls 98' auf relativ einfache Weise an das Bremsverhalten des jeweiligen Fahrzeuggespanns angepasst werden.

Zusätzlich zu dem ersten hydraulischen Drucksensor 50 ist nun ein zweiter hydraulischer Drucksensor 50' vorhanden, der parallel zu dem ersten hydraulischen Drucksensor 50 an die zugeordnete Sensorleitung angeschlossen und ebenfalls außen an dem Gehäuse 100 des Anhängersteuermoduls 98' angeordnet ist. Der zweite hydraulische Drucksensor 50' ist baugleich wie der erste hydraulische Drucksensor 50 ausgebildet, ebenfalls mit einer eigenen Steckerbuchse 120' versehen und über ein mit einem entsprechenden Stecker 128' versehenes Kabel 126' mit dem elektronischen Steuergerät 84 verbunden. Durch den zweiten hydraulischen Drucksensor 50' ist die Funktionsdiagnose sowie die Redundanz der Drucksensoren 24, 50, 50' deutlich verbessert.

### Bezugszeichenliste

- 2: Ventilanordnung (Stand der Technik)
- 2a: Ventilanordnung (erstes erfindungsgemäßes Ausführungsbeispiel)
- 2b: Ventilanordnung (zweites erfindungsgemäßes Ausführungsbeispiel)
- 4: Systemgrenze
- 6: Anhängersteuerventil
- 8: Backupventil
- 10: Wechselventil
- 12: Gehäuse
- 14: Einlassventil, 2/2-Wege-Magnetventil
- 16: Auslassventil, 2/2-Wege-Magnetventil
- 18: Relaisventil
- 20: Abrissventil
- 22: Schalldämpfer
- 24: Drucksensor
- 26, 26': Steuerleitungen
- 28: Sensorleitungen
- 30: Steckerbuchse
- 32a, 32b: Steuerdruckleitung
- 34: Vorratsdruckleitung
- 34a: Weitere Vorratsdruckleitung
- 34b: Ausgangsseitiger Abschnitt der Vorratsdruckleitung 34a
- 34c: Zum Relaisventil 18 führende Vorratsdruckleitung
- 36, 36a: Entlüftungsleitung
- 38: Steuerdruckleitung
- 40: Bremssteuerleitung
- 42: Pneumatische Sensorleitung
- 44: Gehäuse
- 46, 46': Relaisventil
- 48: Redundanzventil, 3/2-Wege-Magnetventil
- 50, 50': Drucksensor
- 52: Steuerleitungen
- 54: Steckerbuchse
- 56: Sensorleitungen
- 58: Steckerbuchse
- 60: Steuerdruckleitung
- 62: Bremssteuerleitung
- 62a: Innerer Leitungsabschnitt der Bremssteuerleitung 62
- 62b: Äußerer Leitungsabschnitt der Bremssteuerleitung 62
- 64: Steuerdruckleitung
- 66: Vorratsdruckleitung
- 68: Rohrverbinder, T-Stück
- 70: Vorratsdruckleitung
- 72: Kupplungskopf "Vorrat" (rot)
- 74: Vorratsdruckleitung
- 74a, 74b: Leitungsabschnitt
- 76: Bremssteuerleitung
- 78: Externe Bremssteuerleitung
- 80: Bremssteuerleitung
- 80a, 80b: Leitungsabschnitt
- 82: Kupplungskopf "Bremse" (gelb)
- 84: Elektronisches Steuergerät (ECU)
- 86: Kabel
- 88: Stecker
- 90: Kabel
- 92: Stecker
- 94: Kabel
- 96: Stecker
- 98, 98': Anhängersteuermodul
- 100: Gehäuse
- 102: Kabel
- 104: Systemgrenze
- 106: Feststellbremsventil
- 108: Steuerdruckleitung
- 110: Systemgrenze
- 112, 112': Redundanzventil, druckgesteuertes 3/2-Wegeventil
- 114, 114': Vorsteuerventil, 3/2-Wege-Magnetventil
- 116: Steuerdruckleitung
- 118: Steckerbuchse
- 120, 120': Steckerbuchse
- 122: Kabel
- 124: Stecker
- 126, 126': Kabel
- 128, 128': Stecker
- p1: Vorratsdruckeingang
- p2: Bremssteuerausgang
- p3: Entlüftungsausgang
- p11: Vorratsdruckeingang
- p21: Vorratsdruckausgang
- p22: Bremssteuerausgang
- p42: Hydraulischer Steuerdruckeingang
- p43: Invertierter Steuerdruckeingang

## Patentansprüche

1. Ventilanordnung (2a, 2b) eines hydraulisch gebremsten Zugfahrzeugs zur Steuerung des Bremsdruckes eines pneumatisch gebremsten Anhängerfahrzeugs, die ein elektronisch gesteuertes Anhängersteuerventil (6) mit einem Einlassventil (14), einem Auslassventil (16), einem pneumatisch ansteuerbaren Relaisventil (18), einem Abrissventil (20) und einem Drucksensor (24) zur Erfassung des eingesteuerten Bremssteuerdruckes sowie zudem ein hydraulisch gesteuertes Backupventil (8) mit einem hydraulisch angesteuerten Relaisventil (46), einem Redundanzventil (48) und einem Drucksensor (50) zur Erfassung des hydraulischen Steuerdruckes aufweist, deren ausgangsseitige Bremssteuerleitungen (40, 76; 62, 78) über ein Wechselventil (10) an den Kupplungskopf "Bremse" (82) geführt sind, **dadurch gekennzeichnet, dass** die Ventile (14, 16, 18, 20) sowie die Drucksensoren (24, 50) des Anhängersteuerventils (6), die Ventile (46, 48) des Backupventils (8) und das Wechselventil (10) in einem Anhängersteuermodul (98) mit einem einzigen Gehäuse (100) zusammengefasst sind.

2. Ventilanordnung (2a, 2b) nach Anspruch 1, **dadurch gekennzeichnet, dass** ein elektronisches Steuergerät (84), welches über elektrische Steuer- und Sensorleitungen (26, 28, 52, 56) mit Magnetventilen (14, 16, 48) und den Drucksensoren (24, 50) des Anhängersteuermoduls (98) verbunden ist, und/oder ein Feststellbremsventil (106), welches über eine pneumatische Steuerdruckleitung (108) an einen invertierten Steuerdruckeingang (p43) des Anhängersteuermoduls (98) angeschlossen ist, unmittelbar an dem Gehäuse (100) des Anhängersteuermoduls (98) angeordnet ist.

3. Ventilanordnung (2a, 2b) nach Ansprüche 1 oder 2, **dadurch gekennzeichnet, dass** der hydraulische Drucksensor (50) und/oder der pneumatische Drucksensor (24) außen an dem Gehäuse (100) des Anhängersteuermoduls (98) angeordnet ist.

4. Ventilanordnung (2a, 2b) nach Anspruch 3, **dadurch gekennzeichnet, dass** optional ein zweiter hydraulischer und/oder ein zweiter pneumatischer Drucksensor (50') vorgesehen ist, welcher parallel zu dem ersten hydraulischen Drucksensor (50) und/oder pneumatischen Drucksensor (24) an die zugeordnete Sensorleitung angeschlossen sowie ebenfalls außen an dem Gehäuse (100) des Anhängersteuermoduls (98) angeordnet ist.

5. Ventilanordnung (2a, 2b) nach Anspruch 1, **dadurch gekennzeichnet, dass** der pneumatische Drucksensor (24) an einen ventilseitigen Leitungsabschnitt (80a) der Bremssteuerleitung (80) angeschlossen ist, der zwischen dem Wechselventil (10) und dem Bremssteuerausgang (p22) des Anhängersteuermoduls (98) angeordnet ist.

6. Ventilanordnung (2a, 2b) nach Anspruch 1, **dadurch gekennzeichnet, dass** das Redundanzventil (112, 112') in einer eingangsseitigen Vorratsdruckleitung (74) des hydraulisch angesteuerten Relaisventils (46) zwischen einer ausgangsseitigen Vorratsdruckleitung (34c) des Abrissventils (20) und einem Vorratsdruckeingang des Relaisventils (46) angeordnet sowie derart ausgebildet ist,
dass der relaisventilseitige Abschnitt (74b) dieser Vorratsdruckleitung (74) im Normalbetrieb des Anhängersteuermoduls (98) entlüftet ist.

7. Ventilanordnung (2a) nach Anspruch 6, **dadurch gekennzeichnet, dass** das Redundanzventil (112) als ein pneumatisch angesteuertes 3/2-Wegeventil ausgebildet ist, durch welches der relaisventilseitige Abschnitt (74b) der Vorratsdruckleitung (74) bei drucklosem Steuerdruckeingang belüftet und bei druckführendem Steuerdruckeingang entlüftet wird, dass dem Redundanzventil (112) ein Vorsteuerventil (114) zugeordnet ist, welches als ein 3/2-Wege-Magnetschaltventil ausgebildet ist, und dass der Steuerdruckeingang des Redundanzventils (112) im unbestromten Zustand des Vorsteuerventils (114) entlüftet sowie im bestromten Zustand des Vorsteuerventils (114) belüftet wird.

8. Ventilanordnung (2b) nach Anspruch 6, **dadurch gekennzeichnet, dass** das Redundanzventil (112') als ein pneumatisch angesteuertes 3/2-Wegeventil ausgebildet ist, durch welches der relaisventilseitige Abschnitt (74b) der Vorratsdruckleitung (74) bei drucklosem Steuerdruckeingang entlüftet und bei druckführendem Steuerdruckeingang belüftet wird, dass dem Redundanzventil (112') ein Vorsteuerventil (114') zugeordnet ist, welches als ein 3/2-Wege-Magnetschaltventil ausgebildet ist, und dass der Steuerdruckeingang des Redundanzventils (112') im unbestromten Zustand des Vorsteuerventils (114') belüftet sowie im bestromten Zustand des Vorsteuerventils (114') entlüftet wird.

9. Ventilanordnung (2b) nach Anspruch 1, **dadurch gekennzeichnet, dass** das hydraulisch angesteuerte Relaisventil (46') justierbar ausgebildet ist.

10. Ventilanordnung (2a, 2b) nach Anspruch 1, **dadurch gekennzeichnet, dass** das hydraulisch angesteuerte Relaisventil (46, 46') mit einem leicht austauschbaren Ventilsteuersatz versehen ist, welcher mindestens einen Ventilkolben, einen Ventilsitz und eine Ventilfeder aufweist.

## Claims

1. Valve arrangement (2a, 2b) of a hydraulically braked tractor vehicle for controlling the brake pressure of a pneumatically braked trailer vehicle, which valve arrangement (2a, 2b) has an electronically controlled trailer control valve (6) with an inlet valve (14), an outlet valve (16), a pneumatically actuable relay valve (18), a breakaway valve (20) and a pressure sensor (24) for detecting the applied brake control pressure, and additionally a hydraulically controlled back-up valve (8) with a hydraulically actuated relay valve (46), a redundancy valve (48) and a pressure sensor (50) for detecting the hydraulic control pressure, the outlet-side brake control lines (40, 76; 62, 78) of which valve arrangement (2a, 2b) are routed via a shuttle valve (10) to the "brake" coupling head (82), **characterized in that** the valves (14, 16, 18, 20) and the pressure sensors (24, 50) of the trailer control valve (6), the valves (46, 48) of the back-up valve (8), and the shuttle valve (10) are combined in the trailer control module (98) with a single housing (100).

2. Valve arrangement (2a, 2b) according to Claim 1, **characterized in that** an electronic control unit (84) which is connected via electric control and sensor lines (26, 28, 52, 56) to solenoid valves (14, 16, 48) and the pressure sensors (24, 50) of the trailer control module (98), and/or a parking brake valve (106) which is connected via a pneumatic control pressure line (108) to an inverted control pressure input (p43) of the trailer control module (98) is arranged directly on the housing (100) of the trailer control module (98).

3. Valve arrangement (2a, 2b) according to Claim 1 or 2, **characterized in that** the hydraulic pressure sensor (50) and/or the pneumatic pressure sensor (24) are/is arranged on the outside of the housing (100) of the trailer control module (98).

4. Valve arrangement (2a, 2b) according to Claim 3, **characterized in that** a second hydraulic and/or a second pneumatic pressure sensor (50') are/is optionally provided which are/is connected to the associated centreline in parallel with the first hydraulic pressure sensor (50) and/or pneumatic pressure sensor (24) and are/is likewise arranged on the outside of the housing (100) of the trailer control module (98).

5. Valve arrangement (2a, 2b) according to Claim 1, **characterized in that** the pneumatic pressure sensor (24) is connected to a valve-side line portion (80a) of the brake control line (80), which valve-side line portion (80a) is arranged between the shuttle valve (10) and the brake control output (p22) of the trailer control module (98) .

6. Valve arrangement (2a, 2b) according to Claim 1, **characterized in that** the redundancy valve (112, 112') is arranged in an inlet-side supply pressure line (74) of the hydraulically actuated relay valve (46) between an output-side supply pressure line (34c) of the breakaway valve (20) and a supply pressure inlet of the relay valve (46), and is configured in such a way that the relay valve-side portion (74b) of this supply pressure line (74) is ventilated during the normal operation of the trailer control valve (98).

7. Valve arrangement (2a) according to Claim 6, **characterized in that** the redundancy valve (112) is configured as a pneumatically actuated 3/2-way valve, by way of which the relay valve-side portion (74b) of the supply pressure line (74) is aerated in the case of a pressureless control pressure input and is ventilated in the case of a pressure-conducting control pressure input, **in that** the redundancy valve (112) is assigned a pilot valve (114) which is configured as a 3/2-way solenoid switching valve, and **in that** the control pressure input of the redundancy valve (112) is ventilated in the non-energized state of the pilot valve (114) and is aerated in the energized state of the pilot valve (114).

8. Valve arrangement (2b) according to Claim 6, **characterized in that** the redundancy valve (112') is configured as a pneumatically actuated 3/2-way valve, by way of which the relay valve-side portion (74b) of the supply pressure line (74) is ventilated in the case of a pressureless control pressure input and is aerated in the case of a pressure-conducting control pressure input, **in that** the redundancy valve (112') is assigned a pilot valve (114') which is configured as a 3/2-way solenoid switching valve, and **in that** the control pressure input of the redundancy valve (112') is aerated in the non-energized state of the pilot valve (114') and is ventilated in the energized state of the pilot valve (114').

9. Valve arrangement (2b) according to Claim 1, **characterized in that** the hydraulically actuated relay valve (46') is of adjustable configuration.

10. Valve arrangement (2a, 2b) according to Claim 1, **characterized in that** the hydraulically actuated relay valve (46, 46') is provided with an easily replaceable valve control set which has at least one valve piston, one valve seat and one valve spring.

## Revendications

1. Dispositif de valves (2a, 2b) d'un véhicule de traction à freinage hydraulique, servant à la commande de la pression de freinage d'un véhicule remorque à freinage pneumatique, qui présente une valve de commande de remorque (6) à commande électronique dotée d'une valve d'admission (14), d'une valve de sortie (16), d'une valve relais (18) pouvant être commandée de manière pneumatique, d'une valve de rupture (20) et d'un capteur de pression (24) servant à la détection de la pression de commande de freinage commandée ainsi qu'en outre une valve auxiliaire (8) à commande hydraulique dotée d'une valve relais (46) à commande hydraulique, d'une valve de redondance (48) et d'un capteur de pression (50) servant à la détection de la pression de commande hydraulique, dont les lignes de commandes de freinage (40, 76 ; 62, 78) côté sortie sont guidées via un distributeur sélecteur (10) jusqu'à la tête de couplage « frein » (82), **caractérisé en ce que** les valves (14, 16, 18, 20) ainsi que les capteurs de pression (24, 50) de la valve de commande de remorque (6), les valves (46, 48) de la valve auxiliaire (8) et le distributeur sélecteur (10) sont rassemblés dans un module de commande de remorque (98) comprenant un boîtier unique (100).

2. Dispositif de valves (2a, 2b) selon la revendication 1, **caractérisé en ce qu'**un appareil de commande (84) électronique, lequel est relié à des électrovannes (14, 16, 48) et aux capteurs de pression (24, 50) du module de commande de remorque (98) par le biais de lignes électriques de commande et de capteurs (26, 28, 52, 56), et/ou une valve de frein de stationnement (106), laquelle est raccordée à une entrée de pression de commande inversée (p43) du module de commande de remorque (98) par le biais d'une ligne de pression de commande (108) pneumatique, sont disposés directement sur le boîtier (100) du module de commande de remorque (98).

3. Dispositif de valves (2a, 2b) selon la revendication 1 ou 2, **caractérisé en ce que** le capteur de pression hydraulique (50) et/ou le capteur de pression pneumatique (24) sont disposés extérieurement sur le boîtier (100) du module de commande de remorque (98).

4. Dispositif de valves (2a, 2b) selon la revendication 3, **caractérisé en ce qu'**éventuellement un deuxième capteur de pression hydraulique et/ou un deuxième capteur de pression pneumatique (50') est/sont prévu(s), lequel est raccordé parallèlement au premier capteur de pression hydraulique (50) et/ou au capteur de pression pneumatique (24) à la ligne de capteur associée et est également disposé extérieurement sur le boîtier (100) du module de commande de remorque (98).

5. Dispositif de valves (2a, 2b) selon la revendication 1, **caractérisé en ce que** le capteur de pression pneumatique (24) est relié à une partie de ligne (80a), côté valve, de la ligne de commande de freinage (80), laquelle est disposée entre le distributeur sélecteur (10) et la sortie de commande freinage (p22) du module de commande de remorque (98).

6. Dispositif de valves (2a, 2b) selon la revendication 1, **caractérisé en ce que** la valve de redondance (112, 112') est disposée dans une ligne de pression de réserve (74), côté entrée, de la valve relais (46) à commande hydraulique entre une ligne de pression de réserve (34c), côté sortie, de la valve de rupture (20) et une entrée de pression de réserve de la valve relais (46) et est réalisée de telle sorte que la partie (74b), côté valve relais, de cette ligne de pression de réserve (74) soit purgée en fonctionnement normal du module de commande de remorque (98).

7. Dispositif de valves (2a) selon la revendication 6, **caractérisé en ce que** la valve de redondance (112) est réalisée sous la forme d'une valve à 3/2 voies à commande pneumatique, au moyen de laquelle la partie (74b), côté valve relais, de la ligne de pression de réserve (74) est ventilée en cas d'entrée de pression de commande sans pression et est purgée en cas d'entrée de pression de commande sous pression, **en ce qu'**une valve pilote (114) est associée à la valve de redondance (112), laquelle valve pilote est réalisée sous la forme d'une électrovalve de commutation à 3/2 voies, et **en ce que** l'entrée de pression de commande de la valve de redondance (112) est purgée dans l'état non alimenté en courant de la valve pilote (114) et est ventilée dans l'état alimenté en courant de la valve pilote (114).

8. Dispositif de valves (2b) selon la revendication 6, **caractérisé en ce que** la valve de redondance (112') est réalisée sous la forme d'une valve à 3/2 voies à commande pneumatique, au moyen de laquelle la partie (74b), côté valve relais, de la ligne de pression de réserve (74) est purgée en cas d'entrée de pression de commande sans pression et est ventilée en cas d'entrée de pression de commande sous pression, **en ce qu'**une valve pilote (114') est associée à la valve de redondance (112'), laquelle valve pilote est réalisée sous la forme d'une électrovalve de commutation à 3/2 voies, et **en ce que** l'entrée de pression de commande de la valve de redondance (112') est ventilée dans l'état non alimenté en courant de la valve pilote (114') et est purgée dans l'état alimenté en courant de la valve pilote (114').

9. Dispositif de valves (2b) selon la revendication 1, **caractérisé en ce que** la valve relais (46') à commande hydraulique est réalisée de manière ajustable.

10. Dispositif de valves (2a, 2b) selon la revendication 1, **caractérisé en ce que** la valve relais (46, 46') à commande hydraulique est dotée d'un ensemble de commande de valve facilement remplaçable, lequel présente au moins un piston de valve, un siège de valve et un ressort de valve.
